# EUROPEAN PATENT APPLICATION

(11) **EP 4 636 616 A1**
(43) Date of publication of application: **22.10.2025**
(21) Application number: 24170996.3
(22) Date of filing: 18.04.2024
(51) Int. Cl.: G06F 21/32, G06N 3/126, H04L 9/08, H04L 9/40, G01R 22/06, G06F 21/62

(54) **METHOD OF SECURING A DATA OBJECT, SECURITY PROGRAM, COMPUTER-READABLE DATA CARRIER, SECURITY APPLICATION, USER DEVICE, AND SERVER DEVICE**

(71) Applicant: Giesecke+Devrient ePayments GmbH, 81677 München (DE)
(72) Inventor: Patankar, Sanjiv, 81677 München (DE); Baji, Makarand, 81677 München (DE)
(74) Representative: LKGLOBAL Lorenz & Kopf Patentanwalt Attorney at Law PartG mbB

(57) **Abstract**

A method, a security program (10), a computer-readable data carrier (12), a security application (6) , a user device (3), and a server device (4) for securing a data object (D), in particular for communications between a first participant (A) and a second participant (B), are provided, the method comprising the steps of generating a at least one parent tensor (V, W) containing population elements (O) of at least one parent population (L) at a secure location, such as a secure server (4); deriving a first child tensor (X) and a second child tensor (Y) containing population elements (O) of a first child population (P), and a second child population (P) respectively; providing the first child tensor (X) to the first participant (A) and the second child tensor (Y) to the second participant (B); encrypting the data object (D) by means of the first child tensor (X) by the first participant (A); sending the encrypted data object (D)to the second participant (B); sending the second child tensor (Y) from the second participant (B) to the secure location; assessing at the secure location, whether the second child tensor (Y) is derived from the at least one parent tensor (V, W); providing the first child tensor (X) to the second participant (B) for enabling decryption of the data object (D) by means of the first child tensor (X) if the assessment is positive.

## Description

### Technical Field

The present disclosure relates to the field of data security and communication. In particular, the present disclosure relates to a method of securing a data object for communications between a first participant and a second participant, to a security program for securing communications, in telecommunication networks, such as the internet, to a computer-readable data carrier, a security application for securing communications between communication partners, in particular in telecommunication networks, such as the internet, to a user device, in particular a terminal device for secure communications between participants, in particular as communication partners in telecommunication networks, such as the internet, and to a server device, in particular a security server providing a secure location for securing communications between participants, in particular communication partners in telecommunication networks, such as the internet.

### Background of the Invention

The need for securing data objects against unauthorised access is omnipresent in present private and professional communication environments. Data objects can be and/or comprise any kind of data element or constructs of data, including, but not limited to data gateways, data accesses, data streams, data blocks, data files, or alike, such as binaries, sounds, images, videos, text, emails, documents, images, folders, etc. According to the state of the art, data objects are commonly protected by passwords and/or pins, which can be defined permanently by a user or altered dynamically, for example, as one-time passwords (OTP). One for improving the security of data objects as known from the prior art is seen in using genetic algorithms.

CN 116599776 A relates to the technical field of electric meters and discloses an intelligent electric meter management method and device based on the Internet of Things, equipment, and a storage medium. The intelligent electric meter management method based on the Internet of Things comprises the steps of performing remote meter reading through an intelligent electric meter to obtain electric meter data; wherein the intelligent electric meter is used as sensing equipment of a sensing layer of the Internet of Things and is used for collecting electric meter data; the method comprises the following steps: collecting electricity meter data, pre-processing the collected electricity meter data to obtain first transmission data, encoding the first transmission data according to a pre-set protocol and a pre-set data structure on an Internet of Things gateway to obtain second transmission data in a standard format, and packaging the second transmission data through a pre-created network data packet to obtain a packaged data packet; obtaining third transmission data. First encoding parameters are optimized based on a pre-set particle swarm optimization model to obtain the second encoding parameters. According to the resource status of the Internet of Things gateway, the second encoding parameters are adjusted through the genetic model to obtain the target encoding parameters.

Londhey, A., Das, M.L. (2017), "Efficient Image Authentication Scheme Using Genetic Algorithms", in: Krishnan, P; Radha Krishna, P; Parida, L; (eds) Distributed Computing and Internet Technology. ICDCIT 2017; Lecture Notes in Computer Science, vol 10109. Springer, Cham. https://doi.org/10.1007/978-3-319-50472-8_14, present an image authentication scheme using Genetic algorithm (GA). Using the crossover and mutation process of GA the original image is randomized into a binary string. A pairing function is then used as a checksum function that converts the binary string to a fixed length digest of the original image. A random permutation is used as the secret parameter between the authenticator generator and verifier. The scheme provides a non-reversible compression and collision resistance property and is secure against chosen plaintext attacks. The experimental results are supposed to show that the proposed scheme is efficient in comparisons to standard cryptographic authentication algorithms.

S. Panda, V. Rajappa and A. Biradar, "Genetic Algorithm Based Secure Authentication Protocol with Dual Central Server and Token Authentication in Large Scale Mobile Ad-Hoc Networks," IEEE GLOBECOM 2008 - 2008 IEEE Global Telecommunications Conference, New Orleans, LA, USA, 2008, pp. 1-6, doi: 10.1109/GLOCOM.2008.ECP.1061, state that major challenges in mobile ad-hoc network (MANET) are that, it does not have any predefined topology and channel path for communication. In the wireless communication domain, the limitation of channel security is enforced by the current technical limitation Wireless communication cannot support the orthodox protocol and topology modelling because of continuous change in network ordering and range with variable number of wireless element present in the network. Furthermore, there are constraints of the mobile device capabilities in term of memory, processing speed and usage of power. As a result of such limitations, challenges to provide the channel security or the authorization of access by the available algorithms arise. Besides the general security objectives like authentication, confidentiality, integrity, availability and non- repudiation, the ad hoc routing protocols should also address location confidentiality, cooperation fairness and absence of traffic diversion. It is being attempted to analyse threats faced by the ad hoc network environment and provide a classification of the various security mechanisms. The respective strengths and vulnerabilities of the existing routing protocols and suggest a comprehensive solution using dual authentication server for the trust management in an ad-hoc network are being analysed. It is proposed that the ad-hoc routing protocol must start with a node as server and from that onward whenever a new connection is established it should assign a node number generated from the server and maintain a table entry for that. Whenever the second node comes in the network, it will be an image server for the main server node for re-authentication any new node comes we will take it for a new entry in the routing table and find a trusted network value for that node. To find the new node value the genetic algorithm is used. To maintain the natural path, an ANT based routing protocol is being followed.

Methods and systems known from the prior art for securing data objects cannot fully satisfy the needs of modern communication environments. In particular, current authentication processes are not fool proof, any static data can be hacked/compromised and thus renders respective processes insecure. Biometric, non-biometric, identity related and/or other static data, e.g., fingerprints, passwords, or PINs, used to authenticate communication between different parties can be stolen by an attack or be hacked, thereby threatening authentication.

### Summary of the Invention

It may be seen as an object underlying the present invention to provide improved security for data objects. In particular, it may thus be seen as an object to provide a way to securely handle authentication for allowing a secure storage of data objects and/or exchange of data objects between communication participants via public networks, such as the Internet, or in private networks. These and further objects are at least partly achieved by the subject-matter of the independent claims.

According to an aspect, a method of securing a data object, in particular for communications between a first participant and a second participant is provided, the method comprising the steps of generating a at least one parent tensor containing population elements of at least one parent population at a secure location, such as a secure server; deriving a first child tensor and a second child tensor containing population elements of a first child population, and a second child population respectively; providing the first child tensor to the first participant and the second child tensor to the second participant; encrypting the data object by means of the first child tensor by the first participant; sending the encrypted data object to the second participant; sending the second child tensor from the second participant to the secure location; assessing at the secure location, whether the second child tensor is derived from the at least one parent tensor; providing the first child tensor to the second participant for enabling decryption of the data object by means of the first child tensor if the assessment is positive.

According to an aspect, a security program for securing communications in telecommunication networks, such as the internet, is provided, wherein the security program comprises instructions which, when the security program is executed by a security application, cause the security application to carry out a corresponding method.

According to an aspect, a computer-readable data carrier is provided, having stored thereon a corresponding security program.

According to an aspect, a security application for securing communications between communication partners, in particular in telecommunication networks, such as the internet, is provided, wherein the security application is configured to carry out a corresponding method, comprises a corresponding security program and/or comprises a corresponding computer-readable data carrier.

According to an aspect, a user device, in particular a terminal device for secure communications between participants, for example, as communication partners in telecommunication networks, such as the internet, is provided, wherein the user device is configured to carry out a corresponding method comprises a corresponding security application.

According to an aspect, a server device, in particular a security server providing a secure location for securing communications between participants, for example, communication partners in telecommunication networks, such as the internet, is provided, wherein the server device is configured to carry out a corresponding method and/or comprises a corresponding security application.

A respective framework can be used for any kind of data storage or transmission. Preferably, more than one parent tensors are used for deriving the child tensors. The framework can be used for multi-party environments. The at least one parent tensor can be mutated to derive the child tensors. A degree of mutation of the at least one parent tensor can be controllable /configurable based on level of security expected for specific implementation. A selection of parents can be random for every iteration from heap of random parent objects. Each parent can have any number of properties associated with it which provides a desired degree of complexity reducing predictability and thus increasing security. A respective method can involve encryption and decryption under original source identification. Respective security mechanisms may be implemented on top of existing security methods.

The proposed solution provides a is a framework enabling combined use of a Genetic Algorithm along with a Heuristic Artificial Intelligence (AI) driven Genetic (object DNA) matching logic for securing any kind of data object, including stored data, data communication and/or source validation etc. Such a solution can be applied in many areas where data compromise as well as improper validations of participants should be avoided during any process, in particular communications, including data transfers. Genetically evolving data objects for participants and the Genetic-AI based matching logic can be provided as a part of the framework. AI managed heuristic methods along with Genetic models provide high performance and greater relative security through-out any software processes. Dynamic and evolving genetically generated data can enable continuous changes in the child objects in the form of mutants, and therefore maintains a high level of complexity and thus security for avoiding any unauthorized access, including attacks, data compromises etc.

Further developments can be derived from the dependent claims and from the following description. Features described with reference to a computing device, such as a user device, and/or server device, and components thereof may be implemented as method steps, or vice versa. Therefore, the description provided in the context of the user device, and/or server device, and their components apply in an analogous manner also to respective methods. In particular, features and functions of the user device, and/or server device, and their components may be implemented as method steps which in turn may be implemented as respective device features or functions.

According to a possible embodiment of the method, the method further comprises the step of encrypting the first child tensor and/or the second child tensor for sending. A public-private-key encryption mechanism, and/or any other encryption or security mechanism, or alike, can be used for encrypting the first child tensor and/or the second child tensor. Thereby, the first child tensor and/or the second child tensor can be encrypted and signed. This allows for further increasing security of any data objects.

According to a possible embodiment of the method, a transformation function involving the first child tensor is used for encrypting the data object by means of the first child tensor. The transformation function can be inverted for decrypting the data object. Involving first child tensor thus allows to securely encrypt and decrypt the data object.

According to a possible embodiment of the method, the transformation function further involves at least one authentication object. The transformation function may combine the first child tensor and the at least one authentication object. This helps to further increase security of any data objects.

According to a possible embodiment of the method, the at least one authentication object involves a biometrics feature, a face recognition feature, an iris feature, a security certificate and/or a security key. The at last one authentication object may include any object exchanges such as one-time passwords (OTP), or alike. Thereby, known, or existing security mechanisms may be combined with the method using parent tensors and child tensors as described herein. On the one hand, this can help to enhance user-friendliness of the described method. On the other hand, this further helps in increasing security of any data objects.

According to a possible embodiment of the method, the transformation function embeds the data object to create a secure object. The transformation function can embed the first child tensor and the authentication object to create the secure object. Different algorithms may be used for transformations deriving the first child tensor and the second child tensor from the at least one parent tensor. Thereby, security of any data objects may be further increased.

According to a possible embodiment of the method, assessing, whether the second child tensor is derived from the at least one parent tensor, involves using a similarity score represented by a probability value of that the first child tensor and/or the second child tensor are or is, respectively, derived from the at least one parent tensor. For a positive assessment, the probability value has to exceed a pre-defined probability threshold. Thereby, the child tensors and parent tensors involved can have a high degree of complexity. This helps in further increasing security of data objects.

According to a possible embodiment of the method, the method further comprises the step of sending the first child tensor to the second participant for enabling decryption of the data object by means of the first child tensor if the assessment is positive. Decryption can make use of an inverse transformation function which may again involve a biometrics feature, a face recognition feature, an iris feature, a security certificate and/or a security key. Consequently, the second participant, who or which, respectively, may comprise a group of participants, is only provided with first child tensor enabling access to the data object upon proof that the second participant is in possession of the second child tensor originating from the at least one parent tensor. In other words, unless the second participant has not received the second child tensor from the first participant, the second participant will not be able to decrypt the data object. This helps in further increasing security of any data objects.

According to a possible embodiment of the method, the method further comprises the step of discarding and/or banning the first child tensor and the second child tensor from further usage by the participants if the assessment and/or decryption is or are, respectively, positive. For any further encryption and decryption cycle, another set of parent tensors and child tensors has to be used. Thereby, a dynamic component is introduced into the whole security process. Thus, attackers cannot access the data object even if they are in possession of a previously used parent tensor and/or child tensor. In other words, according to the presented framework, the parent tensors and social child tensors cannot be continuously evolving, thus preventing any attacker from getting into possession of security relevant data. This helps in further increasing security of any data object.

According to a possible embodiment of the method, the method further comprises the step of using the first child tensor and/or the second child tensor as at least one parent tensor of a new parent generation and mutating at least one population element of the new parent generation for creating a new first child tensor and/or a new second child tensor. The mutation can be carried out at the secure location, such as a secure database operated by a trusted entity. Thereby, on the one hand, a defined starting point for all mutations is used and thus, a reliable system for generating parent tensors and social child tensors is provided. On the other hand, in particular in that the evolution of parent tensors and/or child tensors is carried out at a secure location, the security and trust of the whole framework as described herein, can be further improved.

### Brief Description of the Drawings

- Fig. 1: is a schematic illustration of a security system configured to carry out a method according to the present invention.
- Fig. 2: is a schematic illustration of an exemplary involvement of a transformation function in a method according to the present invention.
- Fig. 3: is a schematic illustration of an exemplary involvement of an inverse transformation function in a method according to the present invention.
- Fig. 4: is a schematic illustration of an exemplary authentication process which can be applied in a method according to the present invention.
- Fig. 5: is a schematic illustration of an exemplary mutation process which can be applied in a method according to the present invention.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

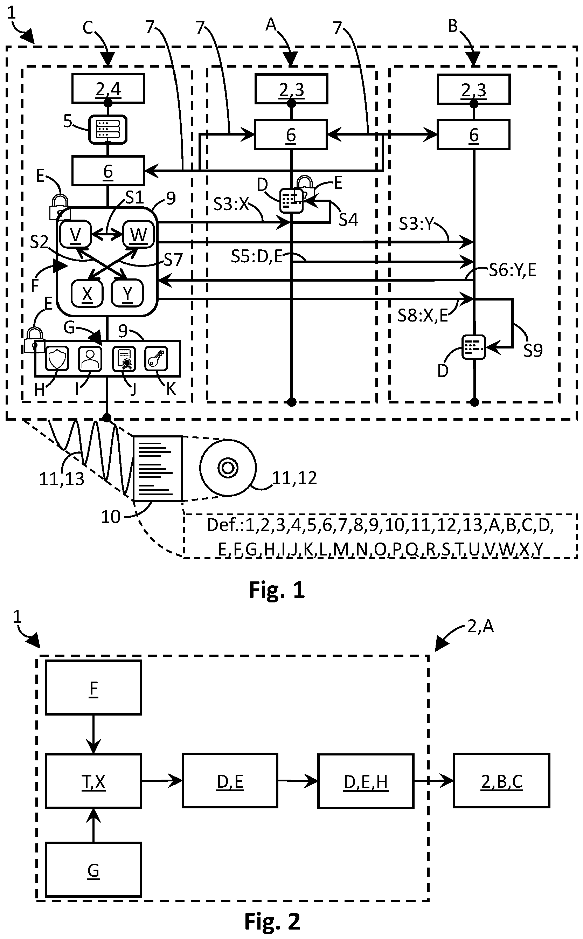

Fig. 1 shows a schematic illustration of a framework in the form of a security system 1 configured to carry out a method according to the present invention. The security system 1 involves a first participant A and a second participant B. Furthermore, the security system 1 may involve a trusted entity C. The first participant A, second participant B, and/or trusted entity C may each operate a computing device 2 taking part in and/or as a part of security system 1. The first participant A and/or the second participant B can each operate the computing device 2 configured as a user device 3, such as a mobile device, terminal device, client device and/or any computing device capable of handling a data object D. The trusted entity may operate the computing device 2 in the form of a server device 4. The server device 3 of the vendor trusted entity C may comprise a hardware security module 5 which can be configured to store, manage, and/or provide any data element or component described herein.

The security system further comprises a security application 6 which may be provided to each of the computing devices 2 and may provide a communication interface 7 enabling communications between the computing devices 2. The security application 6 may be provided in the form of a software plug-in for web browsers and/or email clients, or alike, and therefore can be provided as a locally installed program being executed on the computing devices 2 allowing them to communicate through the communication interface 7 via respective communication lines, such as any kind of wired and/or wireless data connections and transmission means (not shown). The communication interface 7 may be provided as a web interface and/or application programming interface (API), or alike.

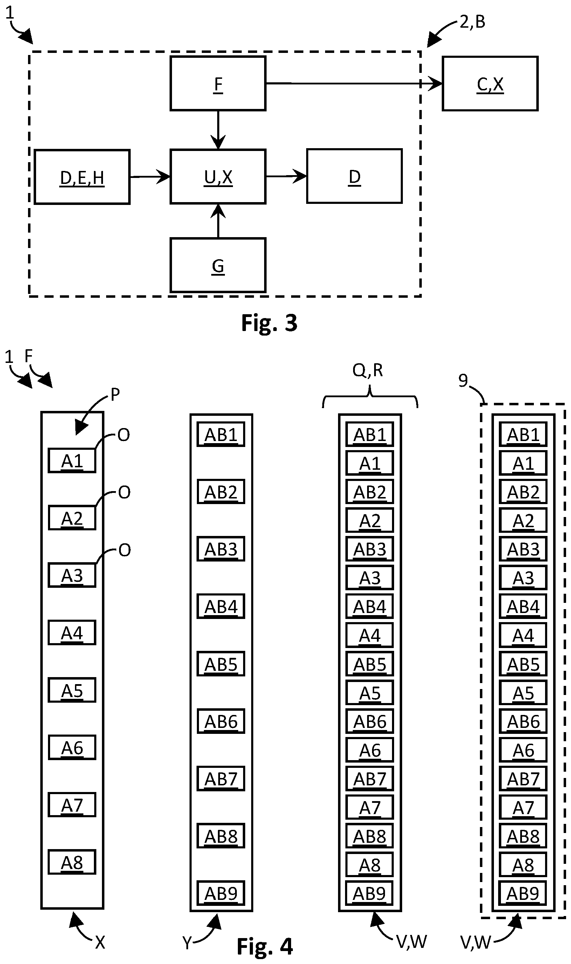

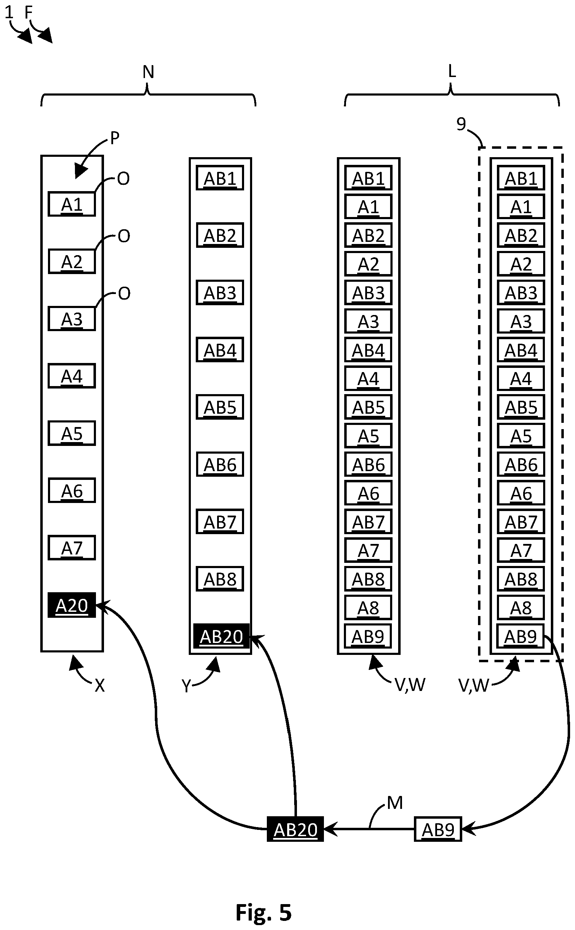

The trusted entity C may operate a secure database 9 on the server device 4, for example, in and/or protected by the hardware security module 5, protected by respective encryption E. The secure database 9 may provide a secure location to securely keep a security framework F and/or a security arrangement G. The security framework F includes genetical algorithms for providing parent tensors V, W, and child tensors X, Y (see Figs. 4 and 5). The security arrangement G may comprise authentication objects H, which may involve, be linked to, and/or comprise biometric features I, security certificates J, and/or security keys K. The biometric features may comprise any face recognition feature, iris feature, as fingerprint feature, voice recognition feature, or alike. Any component of the framework F

In any of the embodiments of the security system 1 as described herein, in particular the computing devices 2, can be configured to execute a computer program in the form of a security program 10. A computer-readable data carrier 11 can have stored thereon the security program 10 and may take the form of a computer-readable medium 12 and/or data carrier signal 13. When carrying out the security program 10, the security system 1 and any components thereof communicate as specified in the security program 10. Parameters associated with and/or underlying the security system 1, any of the components thereof and/or any steps S carried out thereby, can be defined in and/or by the security program 10.

A data exchange taking place between the first participant A and the second participant B may have several steps S. In a first step S1, the trusted entity C generates the parent tensors V, W, namely a first parent tensor V, and a second parent tensor W (see Fig. 4 and 5). In a second step S2, the trusted entity C the derives the child tensors X, Y, namely a first child tensor X, and a second child tensor Y, from the parent tensors V, W, using a genetic algorithm involving mutation (see Fig. 5). In a third step S3, the first child tensor X is provided to the first participant A, and the second child tensor Y is provided to the second participant B, for example, by means of the security application 6 and/or communication interface 7, and possibly additionally protected by encryption E through an additional authentication object H (see Fig. 2).

In a fourth step S4, the first participant A provide an encryption E to the data object D by means of the first child tensor X, possibly using the further authentication object H, for example with the help of the security application 6. In a fifth step S5, the first participant A sends the encrypted data object D to the second participant B by any suitable means. In a sixth step S6, the second participant B sends the second child tensor Y to the trusted entity C, for example, by means of the security application 6 and/or communication interface 7, and possibly additionally protected by encryption E through an additional authentication object H. In a seventh step S7, it is being assessed by the trusted entity C, whether the second child tensor Y received from the same participant B is derived from the parent tensors V, W.

If the assessment is positive, i.e., the second child tensor Y returned from the second participant B is a descendant of the parent tensors V, W, in that their direct relation can be assumed with a reasonable degree of probability, then in an eighth step S8, the trusted authority C provides the first child tensor X to the second participant B, , for example, by means of the security application 6 and/or communication interface 7, and possibly additionally protected by encryption E through an additional authentication object H. In a ninth step S9, the same participant B removes the encryption E from the data object D of the first child tensor X, possibly using the further authentication object H, for example with the help of the security application 6. In other words, the second participant B will only obtain the first child tensor X for decrypting the data object D if the second participant B can prove authorisation by offering the second child tensor Y to secure entity C, which remains the controlling instance for issuing the tensors V, W, X, Y and assessing their relation. In the alternative, should the assessment not be positive, the second participant B will not obtain the first child tensor X and will thus remain unable to decrypt the data object D.

Fig. 2 shows a schematic illustration of an exemplary involvement of a transformation function T in a method according to the present invention. The transformation function T can embed the security framework F, in particular the involved tensors V, W, X, Y, and the security arrangement G, in particular any involved authentication object H, to create a new object from the data object D by providing the respective encryption E through the transformation function T to the data object D. The data object D can then be passed from the trusted entity C to the participants, for example, the first participant A. Any such transfer of the data object D can be further secured, for example by a public key infrastructure (PKI) and/or additional usage of a respective authentication object H. Until this point, all steps may be performed by the participants A, B. After such a transformation and encryption, the encrypted transformed data object D can be passed to another computing device 2, such as to the user device 3 of the second participant, B and/or to a server device 4, for authentication, which may be provided by the trusted entity C.

Fig. 3 shows a schematic illustration of an exemplary involvement of an inverse transformation function U in a method according to the present invention, for example, as it may be carried out by the same participant B. The encrypted transformed data object D can be first decrypted, such that the additional encryption through the respective authentication object H is removed, for example, by PKI-based signing, verification, and encryption. The inverse transformation function U then uses the involved tensor V, W, X, Y that had been used for encryption, in order to decrypt and thereby provide the data object D, possibly by means of the involved security framework F. The successfully used involved tensor V, W, X, Y can be transferred or at least reported back to the trusted entity C.

Fig. 4 shows a schematic illustration of an exemplary authentication process which can be applied in a method according to the present invention, for example, in step 7. In the present example, the tensors V, W, X, Y may be embodied as vectors, each comprising a number of genetical elements O or objects which constitute a population P of the respective tensor V, W, X, Y. For illustration purposes, the population P of the first child tensor X contains 8 genetical elements O, namely A1 to A8. The population P of the second child tensor Y contains nine genetical elements O, namely AB1 to AB9. A respective parent tensor V, W may contain all genetical elements O of the first child tensor X and the second child tensor Y, i.e., both, the population P of the first child tensor X, and the population of the second child tensor Y.

For authenticating, whether the second child tensor Y is derived from the parent tensor V, W, the population P of the second child tensor Y may be compared to all parent tensors V, W capped in the secure database 9, for example by means of a quantitative and/or qualitative comparison of the respective populations P, leading to a similarity score Q represented by a respective probability value R. For example, if the parent tensor V, W, with all the respective genetical elements O named AB1 to AB9 constituting the population P of the second child tensor Y can be found in the secure database 9, then it can be assessed that there is another child of that parent tensor V, W, namely the first child tensor X with the genetical elements O named A1 to A8. This first child tensor X is thus to be provided for executing the inverse transformation function U in order to decrypt the data object D.

Fig. 5 shows a schematic illustration of an exemplary mutation process which can be applied in a method according to the present invention. For example, the parent tensors V, W constitute parent population L which may be regarded as a legacy generation. At least one of the genetical elements O of the parent population L can be mutated through a mutation function M. In the present example, the genetic element O named AB9 is being mutated by the mutation function M to the genetic element named AB20. A child population N maybe derived as a new generation from the parent population L in that at least 1 of the genetical elements O of the respective populations P of the tensors V, W, X, Y, is replaced by the mutated genetic element O the present example, the genetic elements O of the first child tensor X and the second child tensor Y named A8, and AB9, respectively, are being replaced with the mutated genetical elements A20, and AB20, respectively.

Such a mutation may be carried out after every successful assessment and the security framework F thereby replaces any static data by dynamic data, i.e., so-called genetically evolving data objects O, for any secured storage/ transmission of data. In the present example further security arrangement G making the use of authentication objects H (biom./non-biom.) can be added to the child tensors X, Y through transformation logic by means of the transformation function T, thus increasing security of authentication. A Genetical Algorithm and Artificial Intelligence (AI) can be used to generate such dynamic data in the form of genetically evolving data objects O, populating the child tensors X, Y, for the user devices 3 and the server devices for whereby the site tensors X, Y are changed by the server after each successful authentication for both, the user devices 3 and the server devices for. Any child object O may comprise a static data part and a dynamic data part.

A first set of tensors V, W, X, Y, maybe created in a zeroth step S0, for example, in addition to, and/or instead of the first step S1 shown in Fig. 1. For example, the child tensors X, Y can be created for user device 3 and the server device 4 during registration of the user device 3 at the server device 4, for instance, upon installing the security application 6 at the user device 3. For authentication, the user devices 3 can send a concoction of child & identity data objects to the server device 4. The security framework F deciphers the child tensors X, Y and compares them with its child tensors X, Y and/or parent tensors V, W, for determining their genetic resemblance, for example, through using the respective similarity score Q.

This enables to identify an appropriate source of the child tensors X, Y. The deciphered bio/non-bio data can also be compared to the original stored concocted data. The user device 3 can be authenticated for decrypting a data object D if the two concocted child objects match. After each successful authentication, the server device 4 can create a new child tensor X, Y for the respective user device 3 and/or all user devices to be used for the next authentication process. The authentication objects H (biom./non-biom.) can be added to the framework F comprising the tensors V, W, X, Y based on genetical elements O. Authentication can be achieved by AI managed heuristic methods providing high performance and security. Mutating child tensors X, Y, i.e., genetically evolving data elements O, provide a high complexity deterring attackers.

The concept of genetically created child/mutant objects in combination with an AI based matching algorithm for obtaining the similarity score Q for any validations delivers unique identifiers for building a security system 1 for any computing device 2. The described security framework F can use Genetic Algorithms along with a Heuristic AI driven (object DNA) matching logic for securing any data object D, including but not limited to stored data, data communication or source validation, etc. This Solution provides genetically evolving data elements O for participants and the genetic-AI based matching logic as a part of the security framework F.

### Reference Signs

- 1: security system
- 2: computing device
- 3: user device
- 4: server device
- 5: hardware security module
- 6: security application
- 7: communication interface
- 9: secure database
- 10: computer program / security program
- 11: computer-readable data carrier
- 12: computer-readable medium
- 13: data carrier signal

- A: first participant
- B: second participant
- C: trusted entity
- D: data object
- E: encryption
- F: security framework
- G: security arrangement
- H: authentication object
- I: biometric feature
- J: security certificate
- K: security key
- L: parent population / legacy generation
- M: mutation function
- N: child population / new generation

- O: genetical element / population element
- P: population
- Q: similarity score
- R: probability value
- S: step
- T: transformation function
- U: inverse transformation function
- V: first parent tensor
- W: second parent tensor
- X: first child tensor
- Y: second child tensor

- 50: populate tensors
- S1: generate parent tensors
- S2: derive child tensors
- S3: provide child tensors
- S4: encrypt data object
- S5: send data object
- S6: return second child tensor
- S7: assess relation
- S8: provide first child tensor
- S9: decrypt data object

## Claims

1. A method of securing a data object (D), in particular for communications between a first
participant (A) and a second participant (B), the method comprising the steps of generating a at least one parent tensor (V, W) containing population elements (O) of at least one
parent population (L) at a secure location, such as a secure server (4); deriving a first child tensor (X) and a second child tensor (Y) containing population elements (O) of a first child population (P), and a second child population (P) respectively;
providing the first child tensor (X) to the first participant (A) and the second child tensor (Y) to the second participant (B);
encrypting the data object (D) by means of the first child tensor (X) by the first participant (A);
sending the encrypted data object (D)to the second participant (B);
sending the second child tensor (Y) from the second participant (B) to the secure location;
assessing at the secure location, whether the second child tensor (Y) is derived from the at least one parent tensor (V, W);
providing the first child tensor (X) to the second participant (B) for enabling decryption of the data object (D) by means of the first child tensor (X) if the assessment is positive.

2. The method according to claim 1, further comprising the step of encrypting the first child tensor (X) and/or the second child tensor (Y) for sending.

3. The method according to claim 1 or 2, wherein a transformation function (T) involving the first child tensor (X) is used for encrypting the data object (D) by means of the first child tensor (X).

4. The method according to claim 3, wherein the transformation function (T) further involves at least one authentication object (H).

5. The method according to claim 4, wherein the at least one authentication object (H) involves a biometrics feature (I), a face recognition feature, an iris feature, a security certificate (J) and/or a security key (K).

6. The method according to at least one of claims 3 to 5, wherein the transformation function (T) embeds the data object (D) to create a secure object.

7. The method according to at least one of claims 1 to 6, wherein assessing, whether the second child tensor (Y) is derived from the at least one parent tensor (V, W), involves using a similarity score (Q) represented by a probability value (R) of that the first child tensor (X) and/or the second child tensor (Y) are or is, respectively, derived from the at least one parent tensor (V, W).

8. The method according to at least one of claims 1 to 7, further comprising the step of sending the first child tensor (X) to the second participant (B) for enabling decryption of the data object (D) by means of the first child tensor (X) if the assessment is positive.

9. The method of claim 1, further comprising the step of discarding and/or banning the first child tensor (X) and the second child tensor (Y) from further usage by the participants (A, B) if the assessment and/or decryption is or are, respectively, positive.

10. The method according to at least one of claims 1 to 9, further comprising the step of using the first child tensor (X) and/or the second child tensor (Y) as at least one parent tensor (V, W) of a new parent generation (L) and mutating at least one population element (O) of the new parent generation for creating a new first child tensor (X) and/or a new second child tensor (Y).

11. Security program (10) for securing communications in telecommunication networks, such as the internet, wherein the security program (10) comprises instructions which, when the security program (10) is executed by a security application (6), cause the security application (6) to carry out a method of at least one of claims 1 to 10.

12. Computer-readable data carrier (12) having stored thereon the security program (11) according to claim 11.

13. Security application (6) for securing communications between communication partners (A, B), in particular in telecommunication networks, such as the internet, wherein the security application (6) is configured to carry out a method of at least one of claims 1 to 10, comprises a security program (10) according to claim 11, and/or comprises a computer-readable data carrier (12) according to claim 12.

14. User device (3), in particular a terminal device for secure communications between participants (A, B), for example, as communication partners in telecommunication networks, such as the internet, wherein the user device (3) is configured to carry out a method according to at least one of claims 1 to 10 and/or comprises a security application (6) according to claim 13.

15. Server device (4), in particular a security server providing a secure location for securing communications between participants (A, B), for example, communication partners in telecommunication networks, such as the internet, wherein the server device (4) is configured to carry out a method according to at least one of claims 1 to 10 and/or comprises a security application (6) according to claim 13.
